(19) Europäisches Patentamt
European Patent Office
Office européen des brevets

(11) **EP 2 571 812 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(21) Anmeldenummer: **11721496.5**

(22) Anmeldetag: **17.05.2011**

(51) Int Cl.:
*C01G 23/053* (2006.01)     *C22B 34/12* (2006.01)
*B01J 20/06* (2006.01)     *B01J 20/28* (2006.01)
*C02F 1/28* (2006.01)

(86) Internationale Anmeldenummer:
**PCT/EP2011/058002**

(87) Internationale Veröffentlichungsnummer:
**WO 2011/144637 (24.11.2011 Gazette 2011/47)**

(54) **ADSORPTIONSMITTEL ENTHALTEND TITAN- UND EISENVERBINDUNGEN**

ADSORBING AGENT CONTAINING TITANIUM AND IRON COMPOUNDS

AGENT D'ADSORPTION CONTENANT DES COMPOSÉS DE TITANE ET DE FER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2010 DE 102010020820**

(43) Veröffentlichungstag der Anmeldung:
**27.03.2013 Patentblatt 2013/13**

(73) Patentinhaber: **Venator Uerdingen GmbH**
**47829 Krefeld (DE)**

(72) Erfinder:
• **AUER, Gerhard**
**47800 Krefeld (DE)**
• **EICKHAUS, Holger**
**47226 Duisburg (DE)**
• **GÜNNEL, Horst**
**47906 Kempen (DE)**
• **SCHUY, Werner**
**47918 Tönisvorst (DE)**
• **VAN DEN BERG, Maurits**
**44795 Bochum (DE)**
• **PROFT, Berndt**
**47506 Neukirchen-Vluyn (DE)**

(74) Vertreter: **Nobbe, Matthias**
**Demski & Nobbe**
**Patentanwälte**
**Mülheimer Strasse 210**
**47057 Duisburg (DE)**

(56) Entgegenhaltungen:
EP-A1- 0 768 386     EP-A1- 1 443 121
WO-A1-02/26631     WO-A1-2006/087432
DE-A1- 2 810 995     US-B1- 6 923 917

**Beschreibung**

Die vorliegende Erfindung bezieht sich auf ein Verfahren zur Herstellung eines Adsorptionsmittels, das Titan- und Eisenverbindungen enthält, das so hergestellte Adsorptionsmittel und dessen Verwendung in einem Verfahren zur Entfernung von Gift- und Schadstoffen aus einem Fluid unter Verwendung dieses Adsorptionsmittels.

Arsen ist ein überwiegend aus natürlichen Quellen verbreiteter Bestandteil unserer Umwelt, der einem immerwährenden biogeochemischen Kreislauf unterliegt. So befindet sich das größte Arsenvorkommen der Erde in sulfidischer Form gebunden in der Erdkruste. Arsen hat zahlreiche interessante Eigenschaften. So tritt das giftige Element in vielen verschiedenen Formen, sowohl organisch als auch anorganisch auf. Weltweit sind rund 200 Millionen Menschen arsenverseuchtem Wasser ausgesetzt. Tumorerkrankungen, wie z. B. Haut- und Lungenkrebs, können die Folge einer erhöhten Arsenaufnahme sein. Arsen zeigt seine krebserzeugende Wirkung vor allem nach jahrelanger chronischer Aufnahme geringer Mengen.

Früher wurde Arsen als Düngemittel verwendet, so dass viele Böden noch immer kontaminiert sind. Besonders in asiatischen Ländern ist Arsen ein Problem. Zu den Hauptnahrungsmitteln dort gehört Reis, der in Wasser wächst. Wenn dieses stark arsenhaltig ist, reichert die Pflanze den Giftstoff an. Während in Europa, wo der Arsengehalt im Trinkwasser auf zehn Mikrogramm pro Liter beschränkt ist, im Schnitt nur 25 Gramm Reis pro Trag gegessen werden, sind es in Asien 300 Gramm. Hier sind schon Konzentrationen von 800 Mikrogramm Arsen pro Kilo im Reis gefunden worden. In Algen beispielsweise reichert sich das Arsen um den Faktor 100000 im Vergleich zum Meerwasser an. So wurden schon 180 Milligramm organisches Arsen pro Kilogramm Algen (Trockengewicht) gefunden. Die als gesundheitliche Wundermittel aus dem Meer gepriesenen Pflanzen können außerdem bis zu 40 Milligramm anorganisches Arsen pro Kilo Algentrockengewicht enthalten. Für Lebensmittel gilt in Deutschland anders als für Trinkwasser kein Grenzwert, so dass diese Algen frei verkauft werden dürfen.

Eine Möglichkeit zur Reduzierung des Arsen-Eintrags in die Nahrungskette besteht darin, das Arsen aus dem Trinkwasser oder dem Wasser, welches für Landwirtschaft oder Viehzucht Verwendung findet, zu eliminieren oder zumindest die Konzentration zu verringern.

Eisenoxide und -hydroxide haben eine hohe Affinität für Arsen, und werden daher als Adsorptionsmittel eingesetzt. Zum Beispiel beschreiben Schlegel et al. ein Granulat aus Eisenoxid und -Hydroxid mit einer hohen spezifischen Oberfläche (50 bis > 200 m$^2$/g), das für die Adsorption von Schwermetalle aus Flüssigkeitsströmen gut geeignet ist (A. Schlegel et al., European patent EP 1582505 B1). Speziell für diese Anwendung hergestellte Adsorptionsmittel werden zum Beispiel von der Firma Lanxess unter der Bezeichnung Bayoxide E33 (mit BET-Oberflächen im Bereich von 120 bis 250 m$^2$/g) und der Firma Evers unter der Bezeichnung Everzit As (mit einer BET-Oberfläche von >300 m$^2$/g) ange-boten.

In US Patent 2006/0144793 werden Titandioxid-Nanopartikel (< 100 Å) beschrieben, deren Oberfläche mit Hydroxylgruppen besetzt sind, und beschrieben, dass die Adsorption von Schwermetallen an Hydroxylgruppen stattfindet, und dass daher die Hydroxylgruppen für die Adsorption zwingend notwendig sind.

Weiterhin bezieht sich die WO2006087432 auf titansäurehaltige Produkte und Verfahren zur Entfernung von Substanzen aus wässriger Lösung. Insbesondere betrifft die vorliegende Erfindung bezieht sich auf die Reinigung von Wasser und die Entfernung von Arsen.

US06923917 bezieht sich auf ein Verfahren zur Entfernung von von bioverfügbarem Phosphor aus tierischen Abfällen und Boden unter Verwendung eines industriellen Nebenprodukts aus einem Metallherstellungsprozess. Generell ist eine hohe effektive Oberfläche für Adsorptionsprozesse von bedeutendem Vorteil. Es ist z.B. möglich, aus Titaniumverbindungen (z.B. Chloride oder Sulfate) mittels Hydrolyse in Gegenwart eines porösen Substrats ein wirksames TiO$_2$-basiertes Adsorptionsmittel mit hoher Oberfläche herzustellen (US 2003/068683).

Des Weiteren wurde ein feinteiliges Titandioxid der Firma Dow Chemicals (Adsorbsia GTO mit einer BET-Oberfläche im Bereich von 200 bis 300 m$^2$/g) zur Adsorption von Arsen vorgeschlagen.

Die Firma Graver Technologies bietet ein granuliertes Adsorptionsmittel an (Granulatgröße 250 - 1190 μm), dass hauptanteilig Titandioxid aber auch Titanhydroxid, jedoch keine Fremdelemente in nennenswerten Anteilen enthält. Dieses Produkt wird für Adsorption von Schwermetallen verwendet. Laut Graver Technologies sind sowohl die gute Adsorptions-Kinetik als auch die - Kapazität Vorteile von Titan- basierten Adsorptionsmitteln.

Grundsätzlich wird in der Fachwelt davon ausgegangen, dass die Adsorptionswirkung umso besser ist je feinteiliger das Adsorptionsmittel bzw. je größer die BET-Oberfläche oder die Konzentration an Hydroxylgruppen ist. Nachteilig an den existierenden Adsorptionsmitteln sind die aufwendige Herstellung und die damit verbundenen hohen Kosten für das Adsorptionsmittel, zumal in der Praxis häufig sehr große Mengen an Adsorptionsmittel benötigt werden, z.B. zur Reinigung von Grundwasser.

Aufgabe der vorliegenden Erfindung war es daher, ein alternatives, preisgünstiges und hochwirksames Adsorptionsmittel zu finden, dass die bekannten Adsorptionsmittel ersetzen kann und die bestehenden Nachteile überwindet.

Erfindungsgemäß wird diese Aufgabe gelöst durch Bereitstellung eines Verfahren zur Herstellung eines Adsorptionsmittels, das Titan- und Eisenverbindungen enthält, wobei das Verfahren umfasst:

(i) Aufschluss eines titan- und eisenhaltigen Ausgangsstoffes, vorzugsweise Ilmenit und/oder Titanschlacke, mit Schwefelsäure um eine feststoffhaltige Aufschlusslösung zu erhalten;

(ii) Abtrennen der in der Aufschlusslösung enthaltenen Feststoffe, um einen Aufschlussrückstand und eine im Wesentlichen feststofffreie Aufschlusslösung zu erhalten;

(iii) Zugabe von Eisenionen enthaltenden Verbindungen zum Aufschlussrückstand;

(iv) vollständige oder teilweise Neutralisation des Aufschlussrückstandes;

(v) Waschen des neutralisierten Aufschlussrückstandes zur Entfernung von Sulfatsalzen; und

(vi) Trocknen und/oder Granulieren des Aufschlussrückstands, wobei ein Adsorptionsmittel erhalten wird,

wobei die Eisenionen enthaltenden Verbindungen dem Aufschlussrückstand vor dem Neutralisationsschritt zugegeben werden, und

wobei das Adsorptionsmittel mindestens 10 Gew.-% Ti und mindestens 3,5 Gew.-% Fe, bevorzugt 30 mindestens Gew.-% Ti und mindestens 5 Gew.-% Fe bezogen auf das Gesamtgewicht des Adsorptionsmittels, enthält.

Durch Untersuchungen der Erfinder hat sich überraschend herausgestellt, dass es, insbesondere für die Adsorption von Metallen an das Adsorptionsmittel, besonders vorteilhaft ist, wenn als Adsorptionsmittel Aufschlussrückstand verwendet wird, der als Nebenprodukt bei der Herstellung von Titandioxid nach dem Sulfatverfahren anfällt und gemäß dem erfindungsgemäßen Verfahren hergestellt wird. Die Erfinder vermuten, ohne auf diese Hypothese beschränkt zu sein, dass die Verwendung von Aufschlussrückstand besonders vorteilhaft ist, da dieser ein chemisch heterogenes Material ist, welches sowohl Titan (Ti) als auch Eisen (Fe) in oxidischen Formen enthält.

Bei den Schwermetall-haltigen Verbindungen kann es sich insbesondere um Blei-, Quecksilber- Cadmium-, Uran-, Nickel-, Chrom-, Kupfer-, Zink- und/oder Zinn-haltige Verbindungen handelt.

In verschiedenen Ausführungsformen der Erfindung ist die zu adsorbierende Verbindung eine Arsen- oder Blei-haltige Verbindung, vorzugsweise eine Arsen-haltige Verbindung.

Im Zusammenhang mit der vorliegenden Erfindung bezieht sich der Ausdruck - haltige Verbindung", auf eine Verbindung, die das vorgenannte Element in elementarer, gebundener, ionischer und/oder komplexierter Form enthält. Der Ausdruck schließt Salze, Komplexe, Kristalle und alle anderen Formen des entsprechenden Elements, d.h. auch die elementare Form, ein. Die entsprechende Verbindung kann als Feststoff, in flüssiger Form, einschließlich gelöster Form, oder als Gas vorliegen.

Gemäß der Erfindung enthält das verwendete Adsorptionsmittel mindestens 10 Gew.-% Ti und mindestens 3,5 Gew.-% Fe, bevorzugt mindestens 30 Gew.-% Ti und mindestens 5 Gew.-% Fe bezogen auf das Gesamtgewicht des Adsorptionsmittels.

In einer Ausführungsform kann das Adsorptionsmittel Titandioxid ($TiO_2$) und/oder Eisenoxid mindestens 16 Gew.-% $TiO_2$ und/oder mindestens 5 Gew.-% $Fe_2O_3$ enthalten.

Gemäß der Erfindung enthält das Adsorptionsmittel Aufschlussrückstand, der bei der Herstellung von Titandioxid nach dem Sulfatverfahren zur Herstellung bzw. Gewinnung von Titandioxid nach dem Stand der Technik (siehe z.B. Industrial Inorganic Pigments (Herausgeber G. Buxbaum, Wiley-VCH, Weinheim, 3. Auflage 2005, Seite 59 bis 61) oder Ullmann's Enzyklopädie der Technischen Chemie, 4. Ausgabe, Band 15 (1979)) als unlöslicher Rückstand anfällt und aus der sogenannten Schwarzlösung abgetrennt wird und gemäß dem erfindungsgemäßen Verfahren hergestellt wird.

Bei der Herstellung von Titandioxid nach dem Sulfatverfahren wird zunächst das titanhaltige Erz, beispielsweise Ilmenit oder Titanschlacke, gemahlen und dann mit Schwefelsäure aufgeschlossen. Dadurch wird eine feststoffhaltige Lösung oder Suspension, die sogenannte feststoffhaltige Schwarzlösung, in der das Titan gelöst als Titanylsulfat vorliegt, erhalten.

Um die feststoffhaltige Schwarzlösung weiterverarbeiten zu können, ist es notwendig diese Schwarzlösung durch Feststoffabtrennung zu einer feststofffreien Lösung oder Aufschlusslösung, der sogenannten feststofffreien Schwarzlösung, aufzubereiten. Dabei werden die in der Schwarzlösung befindlichen Feststoffpartikel, bei denen es sich üblicherweise um Rückstände des titanhaltigen Ausgangsmaterials d.h. nicht aufgeschlossenes Erz handelt, entfernt. Das ist notwendig, um in den sich anschließenden weiteren Verfahrensschritten und -stufen Titandioxid in ausreichender Reinheit zu gewinnen.

Die Feststoffabtrennung kann beispielsweise durch Zentrifugation, Sedimentation oder durch Filtration erfolgen. In der Regel erfolgt diese Feststoffabtrennung mittels Vakuumfiltern oder Filterpressen, z .B. einem Vakuumdrehfilter oder einer Kammeroder Membranfilterpresse. Häufig wird der in der feststoffhaltigen Schwarzlösung befindliche Feststoff vor der Filtration in einem Eindicker vorkonzentriert.

Weitere Schritte, die gegebenenfalls zur Aufbereitung des durch die Feststoffabtrennung erhaltenen Aufschlussrückstandes dienen, sind einer oder mehrere Waschschritte, die mit Wasser oder verdünnter Schwefelsäure durchgeführt werden können, einer oder mehrere Neutralisationsschritte (z.B. mittels NaOH, $CaO_3$, CaO, Zement oder

NH$_3$), einer oder mehrere Trocknungsschritte oder einer oder mehrere Mahlschritte.

Der bei der Titandioxid-Herstellung mittels des Sulfatverfahrens anfallende Aufschlussrückstand ist großtechnisch in konstanter Qualität vorhanden und ist, da er üblicherweise entsorgt werden muss, kostengünstig verfügbar.

Das so erhaltene Produkt wird im Folgenden als "Aufschlussrückstand" oder "Titankonzentrat" bezeichnet.

Das Adsorptionsmittel kann 1 bis 20 Gew.- % Silizium, vorzugsweise 5 bis 15 Gew.-% Silizium bezogen auf das Gesamtgewicht des Adsorptionsmittels.

Das Adsorptionsmittel kann eine BET-Oberfläche zwischen 1 und 350 m$^2$/g, bevorzugt zwischen 4 und 150 m$^2$/g, besonders bevorzugt zwischen 6 und 40 m$^2$/g, aufweisen.

Das Adsorptionsmittel kann eine Kristallitgröße, gemessen am Rutilreflex, von mehr als 10 nm, bevorzugt >20 nm, aufweisen.

Der Aufschlussrückstand, der im Wesentlichen nicht aufgeschlossenes Erz, Filterhilfsmittel und gegebenenfalls andere Rückstände enthält, kann einen hohen Gehalt an Titandioxid von 10 bis 80 Gew.-%, vorzugsweise 25 bis 70 Gew.-%, noch bevorzugter 40 bis 60 Gew.-% bezogen auf den Feststoffanteil aufweisen. Dabei kann das Titandioxid überwiegend, d.h. > 50%, vorzugsweise > 75 %, in Form der Rutil-Modifikation bzw. als Eisentitanat vorliegen. In solchen Ausführungsformen kann der Anatas-Anteil kleiner als 50%, bevorzugt kleiner als 25% sein. Beispielhaft kann das Verhältnis der mittels Pulverdiffraktometrie bestimmten Intensitäten der (1O1)-Reflektionslinie von Anatas (bei ungefähr 25,28 °2Θ) und der (110)-Reflektionslinie von Rutil (bei ungefähr 27,45 °2Θ) kleiner als 1 sein, bevorzugt kleiner als 0,40.

Der Aufschlussrückstand kann vor der Verwendung als Adsorptionsmittels mit verdünnter Schwefelsäure und/oder Wasser gewaschen werden. Erfindungsgemäß wird der Aufschlussrückstand vor der Verwendung mit einer Base oder durch weiteres Waschen mit Wasser ganz oder teilweise neutralisiert.

Gemäß der Erfindung kann vorgesehen sein, den Aufschlussrückstand zu trocknen, beispielsweise durch Trockenblasen mit Luft oder erwärmter Luft.

Weiterhin kann die Trocknung auch mit einem beliebigen, dem Fachmann bekannten Verfahren und Aggregat erfolgen, beispielsweise in einem Trockenschrank, mit einem Bandtrockner, einem Sprühtrockner oder einem Spinflash-Trockner.

Der getrocknete Aufschlussrückstand kann zur Verbesserung der weiteren Verarbeitbarkeit zu einem feinen Pulver gemahlen oder desagglomeriert werden, z. B. mittels einer Stiftmühle, einem Walzenstuhl, einer Bauermeistermühle oder anderen dem Fachmann bekannten Aggregaten.

Der titanhaltige Ausgangsstoff, von dem nach dem Aufschluss der Aufschlussrückstand als Feststoffanteil übrigbleibt, ist üblicherweise Ilmenit oder Titanschlacke oder eine Mischung davon.

Weitere Schritte, die gegebenenfalls zur Aufbereitung des durch die Feststoffabtrennung erhaltenen Aufschlussrückstandes dienen, sind einer oder mehrere Waschschritte, die mit Wasser oder verdünnter Schwefelsäure durchgeführt werden können, einer oder mehrere Trocknungsschritte, einer oder mehrere Neutralisationsschritte, die optional Zugabe eines Neutralisationsmittels umfassen können, sowie einer oder mehrere Mahl- und/oder Granulationsschritte.

Im Rahmen der Erfindung, kann das Adsorptionsmittel bei einem pH- Wert von <7, beispielsweise <5,5 oder <4 eingesetzt werden. Ein niedriger pH- Wert kann insbesondere die Adsorption von Arsen-haltigen Verbindungen, beispielsweise As<5+>, aus wässrigen Lösungen verbessern.

Die Menge an Adsorptionsmittel kann so gewählt werden, dass das Massenverhältnis von Adsorptionsmittel zu dem zu adsorbierenden Stoff 10 bis 10000, bevorzugt 20 bis 500, besonders bevorzugt 40 bis 100 beträgt.

Bei der Verwendung gemäß dem erfindungsgemäßen Verfahren können die anorganischen und/oder organischen Verbindungen aus einem Fluid, zum Beispiel einem Gas oder einer Flüssigkeit, wie beispielsweise Wasser, insbesondere Abwasser oder Grundwasser, entfernt werden. Dabei können die zu entfernenden Stoffe in gelöster Form, beispielsweise in wässriger Lösung vorliegen.

In einem weiteren Aspekt betrifft die Erfindung daher auch ein Verfahren zur Entfernen von anorganischen und/oder organischen Verbindungen, insbesondere Schad- und/oder Giftstoffen, aus einem Fluid, wobei das Verfahren das in Kontakt bringen des Fluids mit einem Adsorptionsmittel wie in Anspruch 3 definiert umfasst

In einer Ausführungsform des Verfahrens handelt es sich bei dem Fluid um ein Gas, beispielsweise ein Abgas, oder eine Flüssigkeit, wie beispielsweise Wasser, insbesondere Abwasser oder Grundwasser. Bei den Abgasen kann es sich beispielsweise um Abgase aus Verbrennungsprozessen oder bei chemischen Prozessen entstehende Abgase handeln. Bei den Abwässern kann es sich um industrielle Abwässer oder Haushaltsabwässer handeln.

In einer Ausführungsform des Verfahrens handelt es sich bei dem Fluid um den Ausgangsstoff (Englisch: Feed) für das sogenannte Fluid Catalytic Cracking (FCC). Dieses Verfahren wird beispielsweise eingesetzt um schwere Erdölfraktionen in wertvolle Olefine (Ethen, Propen, Buten), Catcracker-Benzin, Gasöl- (engl. Light Cycle CHI, LCO) und Schweröl-Komponenten (Heavy Cycle CHI, HCO, und Slurry) umzusetzen. Bei diesem Prozess sind Verunreinigungen von insbesondere Nickel und Vanadium, aber auch z.B. Kupfer, oder andere metallische Verunreinigungen besonders schädlich für den verwendeten Katalysator. Das Adsorptionsmittel kann dazu eingesetzt werden, um diese Verunreinigungen direkt aus dem Feed zu entfernen. Eine weitere Möglichkeit ist das Zugeben von Adsorptionsmittel in das Reaktionsgemisch. Als dritte Möglichkeit kann das Adsorptionsmittel als Katalysatorkomponente zu dem Katalysator zugegeben werden. Bei dem Fluid handelt es sich in diesem Fall beispielsweise um Erdöl bzw. Erdölfraktionen.

Bei den Schad- und/oder Giftstoffen, die gemäß des erfindungsgemäßen Verfahrens aus dem Fluid adsorbiert werden, kann es sich um Phosphate oder Arsen-, Antimon-, Schwefel-, Selen-, Tellur-, Cyano- und Schwermetall-haltige Verbindungen handeln. Beispielhafte Schwermetalle sind die oben erwähnten. Vorzugsweise handelt es sich bei den adsorbierten Stoffen um Arsen- und/oder Blei-haltige Verbindungen.

Das In-Kontakt-bringen des Adsorptionsmittels mit dem Fluid kann auf bekannte Art und Weise erfolgen. Insbesondere kann das Adsorptionsmittel als Feststoff, d.h. beispielsweise in Granulatform, mit dem Fluid in Kontakt gebracht werden. Dabei kann das Adsorptionsmittel vorteilhaft auf einen Träger aufgebracht sein oder in Form einer Patrone oder Kartusche, die von dem Fluid durchströmt wird, eingesetzt werden.

Bei dem titan- und eisenhaltigen Ausgangsstoff kann es sich um titanhaltige Erze, wie z.B. Ilmenit oder Titanschlacke handeln.

Der Aufschluss- und/oder Trennschritt können analog zu den entsprechenden Schritten des bekannten Sulfatverfahrens zur Herstellung von Titandioxid durchgeführt werden.

Der Aufschlussrückstand wird im Verlauf des Verfahren gemäß Anspruch 1 ganz oder teilweise neutralisiert. Hierfür eignen sich alle dem Fachmann geläufigen Neutralisationsmittel, besonders bevorzugt werden jedoch solche Neutralisationsmittel verwendet, welche entweder gut auswaschbare Sulfate (beispielsweise Alkali, Ammoniak, Mg) oder schwerlösliche Sulfate (beispielsweise Ba) bilden. Auf diese Weise enthält das erfindungsgemäße Adsorptionsmittel wenig Salze, welche bei der Anwendung in das zu reinigende Medium übertreten. Letzteres ist insbesondere bei Verwendung Ca-haltiger Neutralisationsmittel der Fall.

Erfindungsgemäß werden dem Aufschlussrückstand vor dem Neutralisationsschritt Eisenionen enthaltende Verbindungen zugegeben. Auf diese Weise werden bei der Neutralisation feinteilige Eisenhydroxide gebildet, welche die Adsorptionswirkung verstärken. Bevorzugt werden Eisensalze in gelöster Form, besonders bevorzugt in Form von Eisen(II)sulfat und/oder Eisen(III)sulfat, zugegeben.

Der Anteil an löslichem Eisen in dem mit Eisen(II)sulfat oder Eisen(III)sulfat versetzten Adsorptionsmittel beträgt vorzugsweise >0,5 Gew.-%, bevorzugter >1,0 Gew.-%, besonders bevorzugt > 2Gew.-%, jeweils bezogen auf Menge an Adsorptionsmittel.

Der Anteil an löslichem Eisen in dem Adsorptionsmittel kann auch ins Verhältnis zu der Menge an gelöstem Titan gesetzt werden: Das Massenverhältnis von löslichem Eisen zu löslichem Titan in dem mit Eisen(II)sulfat oder Eisen(III)sulfat versetzten Adsorptionsmittel beträgt >0,8, bevorzugt >1,5, besonders bevorzugt >3.

Die Bestimmung des löslichen Eisens und Titans erfolgt in der Weise, dass bei einer Suspendierung des Adsorptionsmittels in der zehnfachen Menge einer 30%-igen Schwefelsäure nach einstündigem Rühren und anschließender Abtrennung der ungelösten Bestandteile die Eisen- bzw. Titankonzentration in der Flüssigphase bestimmt wird.

Das Trocknen des Aufschlussrückstandes kann beispielsweise durch Trockenblasen mit Luft oder erwärmter Luft erfolgen. Weiterhin kann die Trocknung auch mit einem beliebigen, dem Fachmann bekannten Verfahren und Aggregat erfolgen, beispielsweise in einem Trockenschrank, mit einem Bandtrockner, einem Sprühtrockner oder einem Spinflash-Trockner.

Der getrocknete Aufschlussrückstand kann zu einem feinen Pulver gemahlen oder desagglomeriert werden, z. B. mittels einer Stiftmühle, einem Walzenstuhl, einer Bauermeistermühle oder anderen dem Fachmann bekannten Aggregaten.

Der getrocknete Aufschlussrückstand kann zu Granulaten jeder geeigneten Dimensionen gepresst werden, z.B. mittels einer Doppelwalzpresse, einer Tablettenpresse, einer Schneckenpresse oder anderen dem Fachmann bekannten Aggregaten.

Für die Granulation des Aufschlussrückstandes kann dieser auch mit geeigneten anorganischen Additiven, wie beispielsweise $SiO_2$, hydraulisch reagierenden Ca-Verbindungen wie Zement oder CaO, Polyphosphaten, etc., und/oder organischen Additiven wie Polyvinylacetat, Cellulose, etc., optional unter Zugabe von Wasser, versetzt werden. Danach kann die erhaltenen Masse getrocknet und beispielsweise durch Passieren durch ein Sieb mit geeigneter Maschenweite geschrotet werden.

Die Granulation des Aufschlussrückstandes kann auf chemischen Weg (mit Hilfe von Additiven) oder auf physikalischen Weg (mit Hilfe von Presskraft) oder durch eine Kombination von beiden Verfahrenswege (mit Hilfe von Additiven und mit Hilfe von Presskraft) erfolgen.

Somit betrifft die Erfindung ein Adsorptionsmittel, das gemäß dem erfindungsgemäßen Verfahren erhältlich ist. Dabei kann das Adsorptionsmittel in granulierter Form vorliegen.

Das Adsorptionsmittel kann auf einem geeigneten Trägerstoff aufgebracht werden, z.B. Polyethylen, oder Alkydharze, oder PTFE, etc. Dieses Trägermaterial kann je nach Anwendung auf eine Metalloberfläche angebracht werden, so dass das Trägermaterial als Bindeschicht zwischen dieser Metalloberfläche und dem Adsorptionsmittel funktioniert. Anderseits können auch Granulate erzeugt werden, die aus Trägerstoff und Adsorptionsmittel bestehen.

Schließlich betrifft die Erfindung ebenfalls eine Vorrichtung, die das erfindungsgemäße Adsorptionsmittel enthält. Dabei kann es sich beispielsweise um einen festen Träger handeln, auf den das Adsorptionsmittel aufgebracht oder in dem das Adsorptionsmittel eingeschlossen ist. Ein Beispiel für eine solche Vorrichtung ist ein Behälter, wie beispielsweise eine Kartusche oder Patrone, die das Adsorptionsmittel enthält, aber auch eine Vorrichtung mit Platten oder Lamellen, auf die das Adsorptionsmittel aufgebracht ist.

Das erfindungsgemäße Adsorptionsmittel kann unter Umständen nach Gebrauch regeneriert werden. Beispielsweise kann die Regeneration des beladenen Adsorptionsmittels durch Wäsche mit alkalischen oder sauren Lösungen erfolgen. Alternativ kann das Adsorptionsmittel nach Verwendung entsorgt werden. Beispielsweise kann das beladene Adsorptionsmittel verglast, in eine zementhaltige Matrix fest eingebunden oder mit einer wasserdichten anorganischen oder organischen Beschichtung versehen und so zur Entsorgung bereitgestellt werden.

Weitere Ausführungsformen der Erfindung sind in den Ansprüchen enthalten. Die folgenden Beispiele betreffen nicht erfindungsgemäße Ausführungen eines Adsorptionsmittels außerhalb der Erfindung und dienen der Veranschaulichung einer entsprechenden Verfahrensweise.

**Beispiele**

Beispiel 1

Die beim Aufschluss einer titanhaltigen Schlacke mit Schwefelsäure erhaltene feststoffhaltige Aufschlusslösung wurde in einen Eindicker überführt. Aus dem Unterlauf des Eindickers wurde in einer Filterpresse der Aufschlussrückstand abgetrennt, mit Natronlauge neutralisiert, erneut filtriert und anschließend sprühgetrocknet.

Das erhaltene Produkt wies folgende Zusammensetzung auf:

**Sprühgetrockneter Aufschlussrückstand**

| | | | |
|---|---|---|---|
| Restfeuchte IR Tr. 30' 105°C | | [%] | 0,45 |
| Restfeuchte IR Tr. 2d 30" 160°C | | [%] | 0,51 |
| TGV MS-S 2' US-Sonotrode 200W [$\mu$m] | D[v,0.1] | | 1,4 |
| | D[v,0.5] | | 16,3 |
| | D[v.0.9] | | 56,6 |
| | D[v,0.98] | | 89,6 |
| | D[4.3] | | 23,5 |
| | | | |
| DIN-pH | | | 8,5 |
| Schüttgewicht | | [g/cm$^3$] | 0,96 |
| BET | | [m$^2$/g] | 10,6 |
| | | | |
| RFA [%] | | Ti | 28,9 |
| | | Si | 12,3 |
| | | Fe | 5,4 |
| | | Ca | 2,6 |
| | | Na | 2,5 |
| | | Al | 1,7 |
| | | Mg | 1,4 |
| | | S | 1,2 |
| | | Mn | 0,8 |
| | | K | 0,3 |

(fortgesetzt)

| Zr | 0,2 |
|---|---|
| Nb | 0,1 |

Beispiel 2:

100 ml Schwermetalllösung, hergestellt durch Auflösen eines Schwermetallsalzes in Wasser, wurden mit Salpetersäure oder Natronlauge auf den gewünschten pH-Wert eingestellt. Diese Lösung wurde in einem Becherglas vorgelegt und unter Rühren das Adsorptionsmittel zugefügt. Der pH-Wert wurde mit Salpetersäure oder Natronlauge auf den gewünschten pH- Wert eingestellt und nach 5 Minuten eventuell korrigiert. Nach einer Gesamtrührzeit von 30 Minuten bei Raumtemperatur (20-25°C) wurde kurze Zeit sedimentieren lassen und die überstehende Lösung über ein 0,45 $\mu$m Membranfilter klar filtriert. Analysiert wurden die Ausgangslösung und das Filtrat.

Es wurden folgende Schwermetalle, Konzentrationen, pH-Werte und Adsorptionsmittel eingesetzt:

**A:** Blei ($Pb^{2+}$) 13 mg/l, pH 2, Adsorptionsmittel: A-K-1 (feinteiliger Anatas der Firma crenox GmbH mit einer BET-Oberfläche von ca. 90 $m^2/g$), Verhältnis: 13 mg Blei auf 1 g Adsorbermasse;

**B:** Blei ($Pb^{2+}$) 13 mg/l, pH 2, Adsorptionsmittel: Aufschlussrückstand gemäß Beispiel 1, Verhältnis: 13 mg Blei auf 1 g Adsorbermasse;

**C:** Blei ($Pb^{2+}$) 13 mg/l, pH 3, Adsorptionsmittel: A-K-1(feinteiliger Anatas der Firma crenox GmbH mit einer BET-Oberfläche von ca. 90 $m^2/g$), Verhältnis: 13 mg Blei auf 1 g Adsorbermasse;

**D:** Blei ($Pb^{2+}$) 13 mg/l, pH 3, Adsorptionsmittel: Aufschlussrückstand gemäß Beispiel 1, Verhältnis: 13 mg Blei auf 1 g Adsorbermasse;

**E:** Arsen ($As^{5+}$) 0,058 mg/l, pH 3,2, Adsorptionsmittel: A-K-1 (feinteiliger Anatas der Firma crenox GmbH mit einer BET-Oberfläche von ca. 90 $m^2/g$), Verhältnis: 0,058 mg Arsen auf 1 g Adsorbermasse;

**F:** Arsen ($As^{5+}$) 0,058 mg/l, pH 3,2, Adsorptionsmittel: Aufschlussrückstand gemäß Beispiel 1, Verhältnis: 0,058 mg Arsen auf 1 g Adsorbermasse;

**G:** Arsen ($As^{5+}$) 0,058 mg/l, pH 3,2, Adsorptionsmittel: TH 8600 (= handelsübliches Produkt der Firma crenox GmbH), Verhältnis: 0,058 mg Arsen auf 1 g Adsorbermasse

**H:** Arsen ($As^{5+}$) 0,058 mg/l, pH 3,2, Adsorptionsmittel: Bayferrox 920 (= handelsübliches Produkt der Firma Lanxess Deutschland GmbH), Verhältnis: 0,058 mg Arsen auf 1 g Adsorbermasse I: Arsen ($As^{5+}$) 11 mg/l, pH 3,2, Adsorptionsmittel: Aufschlussrückstand gemäß Beispiel 5, Verhältnis: 11 mg Arsen auf 1 g Adsorbermasse;

**J:** Arsen ($As^{5+}$) 11 mg/l, pH 3,2, Adsorptionsmittel: TH 8600 (= handelsübliches Produkt der Firma crenox GmbH), Verhältnis: 11 mg Arsen auf 1 g Adsorbermasse

Die erhaltenen Ergebnisse sind in Tabelle 1 dargestellt: (Massen-% bezieht sich auf Pb bzw. As. Beladung bedeutet: Menge an Metall in mg bezogen auf Menge an Adsorptionsmittel in g)

**Tabelle 1:**

| Beispiel | nach Adsorption: | | |
|---|---|---|---|
| | Massen-% in Lsg. | Massen-% adsorbiert | Beladung mg/g |
| | | | |
| A | 92 | 8 | 0,9 |
| B | 92 | 8 | 1 |
| C | 72 | 28 | 3,5 |
| D | 68 | 32 | 4,2 |
| | | | |
| E | 57 | 43 | 0,025 |
| F | 12 | 88 | 0,051 |
| G | 2 | 98 | 0,057 |
| H | 28 | 72 | 0,042 |

(fortgesetzt)

| Beispiel | nach Adsorption: | | |
|---|---|---|---|
| | Massen-% in Lsg. | Massen-% adsorbiert | Beladung mg/g |
| I | 72 | 28 | 3,1 |
| J | 1 | 99 | 10,9 |

Beispiel 3:

Herstellung eines Granulates **1** aus Aufschlussrückstand:

143 g Filterkuchen eines sauer gewaschenen Titankonzentrates (= mit 10%iger Schwefelsäure gewaschener Filterkuchen des Aufschlussrückstands aus dem Prozessschritt ii) wie auf Seite 10 beschrieben) wurden in einem Mischer geknetet, mit 6 g Calciumoxid sowie 69,5 g destilliertem Wasser versetzt und homogenisiert, so dass eine pastenartige Masse entstand. Diese wurde bei einer Temperatur von 120°C getrocknet und der Trockenrückstand mittels Passierung über ein Sieb mit einer Maschenweite von 3 mm geschrotet. Der Feinkornanteil <0,5mm wurde verworfen.

Herstellung eines Granulates **2** aus Aufschlussrückstand :

143 g Filterkuchen eines sauer gewaschenen Titankonzentrates (= mit 10%iger Schwefelsäure gewaschener Filterkuchen des Aufschlussrückstands aus dem Prozessschritt ii) wie auf Seite 10 beschrieben) wurden in einem Mischer geknetet, mit 50g Dünnsäure sowie 11,5g einer 50%igen Natriumpolyphosphat-Lösung versetzt und homogenisiert, so dass eine pastenartige Masse entstand. Diese wurde bei einer Temperatur von 120°C getrocknet, der Trockenrückstand mittels Passierung über ein Sieb mit einer Maschenweite von 3mm geschrotet. Der Feinkornanteil <0,5mm wurde verworfen.
Die mit granuliertem Adsorptionsmittel erhaltenen Ergebnisse sind in Tabelle 2 dargestellt.

**Tabelle 2**

| Beispiel | BET | Schadstoff | Verhältnis : mg As/g Adsorbermasse | Parameter pH | c [mg/l] vor c Adsorption | [mg/l] nach Adsorption | Beladung: mg As/g Adsorptionsmittel | Massen % adsorbiert |
|---|---|---|---|---|---|---|---|---|
| Granulat 1 | 14m²/g | As 5+ | 104 | 3,0 | 104 | 100 | 4 | 4 |
| | | As 5+ | 10,4 | 3,0 | 104 | 44 | 6 | 58 |
| | | | | | | | | |
| | | As 5+ | 107 | 8,0 | 107 | 100 | 7 | 7 |
| | | As 5+ | 10,7 | 8,0 | 107 | 42 | 7 | 61 |
| | | | | | | | | |
| Granulat 2 | 6 m²/g | As 5+ | 104 | 3,0 | 104 | 93 | 11 | 11 |
| | | As 5+ | 10,4 | 3,0 | 104 | 1,0 - | 10 | 99 |
| | | | | | | | | |
| | | As 5+ | 107 | 8,0 | 107 | 83 | 22 | 22 |
| | | As 5+ | 10,7 | 8,0 | 107 | 0,3 | 11 | 100 |

Beispiel 4:

Verschiedene Adsorptionsmittel wurden hinsichtlich ihrer Wirksamkeit verglichen. Die Ergebnisse sind in Tabelle 3.1 (hohe Konzentration an gelöstem Arsen) und 3.2 (niedrige Konzentration an gelöstem Arsen) dargestellt.

Spalte 3 (Massen-% adsorbiert) beschreibt dabei den Anteil der anfangs gelösten Metalle, die auf dem Adsorptionsmittel festgehalten wurden.

**Tabelle 3.1** (hohe Konzentration an gelöstem Arsen)

| Adsorptionsmittel: | Element | Massen-% adsorbiert | Parameter | | |
|---|---|---|---|---|---|
| | | | pH | c [mg/l] vor Adsorption | c [mg/l] nach Adsorption |
| | | | | | |
| Titankonzentrat | As5+ | 28 | 3 | 11 | 7,9 |
| TH | As5+ | 99 | 3 | 11 | 0,10 |
| | | | | | |
| Titankonzentrat | As5+ | 6 | 5 | 10 | 9,4 |
| TH | As5+ | >99 | 5 | 10 | <0,10 |
| | | | | | |
| Titankonzentrat | As5+ | 9 | 7 | 11 | 10 |
| TH | As5+ | 96 | 7 | 11 | 0,45 |
| | | | | | |
| Titankonzentrat | As5+ | 0 | 8 | 11 | 11 |
| TH | As5+ | 91 | 8 | 11 | 1,0 |

Dabei zeigt sich, dass die Wirksamkeit (Spalte 3) von Titankonzentrat umso besser ist, je niedriger der pH-Wert der Lösung ist. Für Titanhydrat (TH) ist hingegen die Wirksamkeit im gesamten untersuchten pH-Bereich etwa gleich gut.,

**Tabelle 3.2** (niedrige Konzentration an gelöstem Arsen)

| Adsorptionsmittel: | Element | Massen-% adsorbiert | Parameter | | |
|---|---|---|---|---|---|
| | | | pH | c [mg/l] vor Adsorption | c [mg/l] nach Adsorption |
| A-K-1 | As5+ | 43 | 3 | 0,058 | 0,033 |
| Titan konzentrat | As5+ | 88 | 3 | 0,058 | 0,007 |
| TH | As5+ | 98 | 3 | 0,058 | 0,001 |
| Lanxess Eisenoxid Bayferrox 920 | As5+ | 72 | 3 | 0,058 | 0,016 |
| | | | | | |
| A-K-1 | As5+ | 94 | 8 | 0,017 | 0,001 |
| Titankonzentrat | As5+ | 18 | 8 | 0,017 | 0,014 |
| TH | As5+ | >94 | 8 | 0,017 | <0,001 |
| Lanxess Eisenoxid Bayferrox 920 | As5+ | 88 | 8 | 0,017 | 0,002 |

Dabei zeigt sich, dass die Wirksamkeit (Spalte 3) des erfindungsgemäßen Titankonzentrats bei einem pH-Wert von 3 sehr gut und vergleichbar mit den teilweise wesentlich feinteiligeren Vergleichsprodukten ist (BET-Oberflächen von Titankonzentrat = ca. 10 $m^2$/g, A-K-1 = ca. 90 $m^2$/g, Titanhydrat 8600 = >300 m2/g, Bayferrox 920 = ca. 15 $m^2$/g).

Beispiel 5:

Herstellung eines Granulates **3** aus Aufschlussrückstand:

Der Aufschlussrückstand wird mit einen Bindemittel versetzt und in einer Knetmaschine (Krups-3-Mix) zu einer Paste homogenisiert, getrocknet und geschrotet.

Abriebtest:

10 g des zu untersuchenden Granulats der Korngrößenfraktion 0,5-4,0 mm werden in eine zylinderförmige 250 ml-Glasflasche eingewogen, mit 150ml VE-Wasser versetzt und auf einer Schüttelmaschine über einen Zeitraum von 30 Minuten mit ca. 250 Upm bei Raumtemperatur in Rotation versetzt.
Anschließend wurde der Feinanteil <0,1mm der Suspension mittels eines Siebes isoliert, getrocknet und gewogen.

$$Abriebswert\ x(\%) = [100 \times Auswaage\ Feinanteil(g)/Einwaage\ Granulat(g)]$$

Tabelle 3.3 (Abriebswerte mit verschiedenen Bindemitteln)

| Bindemittel | | Anteil | Abriebswert |
|---|---|---|---|
| Bindemittel | Handelsname | Gew.-% | % |
| Polyvinylacetat | Mowilith | 20 | 8,22 |
| Portlandzement | ISTRA 40 | 20 | 10,7 |
| Portlandhüttenzement | CEMII/A | 20 | 3,95 |
| Calciumoxid | | 20 | 9,72 |
| Calciumoxid + Portlandzement | | 7,3 + 10 | 5,99 |

Beispiel 6:

Herstellung eines Granulates **4** aus Aufschlussrückstand :

8,8 g des Aufschlussrückstands wird mit einem Laborpresswerkzeug bei einem Pressdruck von 7,4 kN/cm2 zu einem homogenen Pressling von 3 cm Durchmesser gepresst. Der Pressling wird in einer zylinderförmige 250ml-Glasflasche mit 150ml VE-Wasser versetzt und auf einer Schüttelmaschine über einen Zeitraum von 30 Minuten mit ca. 250 Upm bei Raumtemperatur in Rotation versetzt.
Anschließend wurde der Feinanteil <0,1mm der Suspension mittels eines Siebes isoliert, getrocknet und gewogen.

$$Abriebswert\ x(\%) = [100 \times Auswaage\ Feinanteil(g)/Einwaage\ Pressling(g)]$$

$$Gefunden\ wurde\ ein\ Wert\ von\ 1,4\ Gew.-\%$$

**Patentansprüche**

1. Verfahren zur Herstellung eines Adsorptionsmittels, das Titan- und Eisenverbindungen enthält, wobei das Verfahren umfasst:

(i) Aufschluss eines titan- und eisenhaltigen Ausgangsstoffes, vorzugsweise Ilmenit und/oder Titanschlacke, mit Schwefelsäure um eine feststoffhaltige Aufschlusslösung zu erhalten;
(ii) Abtrennen der in der Aufschlusslösung enthaltenen Feststoffe, um einen Aufschlussrückstand und eine im Wesentlichen feststofffreie Aufschlusslösung zu erhalten;
(iii) Zugabe von Eisenionen enthaltenden Verbindungen zum Aufschlussrückstand;
(iv) vollständige oder teilweise Neutralisation des Aufschlussrückstandes;
(v) Waschen des neutralisierten Aufschlussrückstandes zur Entfernung von Sulfatsalzen; und
(vi) Trocknen und/oder Granulieren des Aufschlussrückstands, wobei ein Adsorptionsmittel erhalten wird,

wobei die Eisenionen enthaltenden Verbindungen dem Aufschlussrückstand vor dem Neutralisationsschritt zugegeben werden, und
wobei das Adsorptionsmittel mindestens 10 Gew.-% Ti und mindestens 3,5 Gew.-% Fe, bevorzugt mindestens 30 Gew.-% Ti und mindestens 5 Gew.-% Fe bezogen auf das Gesamtgewicht des Adsorptionsmittels, enthält.

2. Verfahren nach Anspruch 1, **dadurch gekennzeichnet, dass** als Eisenionen enthaltende Verbindungen Eisensalze in gelöster Form, bevorzugt in Form von Eisen(II)sulfat und/oder Eisen(III)sulfat, zugegeben werden.

3. Adsorptionsmittel, erhalten nach dem Verfahren gemäß Anspruch 1 oder 2, enthaltend mindestens 10 Gew.-% Ti und mindestens 3,5 Gew.-% Fe, bevorzugt mindestens 30 Gew.-% Ti und mindestens 5 Gew.-% Fe bezogen auf das Gesamtgewicht des Adsorptionsmittels.

4. Vorrichtung enthaltend das Adsorptionsmittel nach Anspruch 3, **dadurch gekennzeichnet, dass** das Adsorptionsmittel auf einem Träger fixiert oder in einem Behältnis in Form einer Patrone oder Kartusche eingeschlossen ist.

5. Verfahren zum Entfernen von anorganischen und/oder organischen Verbindungen, insbesondere von Schad- und/oder Giftstoffen, aus einem Fluid, wobei das Verfahren das In-Kontakt-bringen des Fluids mit einem Adsorptionsmittel nach Anspruch 3 umfasst.

**Claims**

1. A process for preparing an adsorbent containing titanium and iron compounds, wherein the process comprises:

(i) digesting a titanium- and iron- containing starting material, preferably ilmenite and/or titanium slag, with sulfuric acid to obtain a solids-containing digestion solution;
(ii) separating the solids contained in the digestion solution to obtain a digestion residue and a digestion solution substantially free of solids;
(iii) adding compounds containing iron ions to the digestion residue;
(iv) completing or partial neutralising the digestion residue;
(v) washing the neutralised digestion residue to remove sulphate salts; and
(vi) drying and/or granulating the digestion residue to obtain an adsorbent,

wherein the iron ions-containing compounds are added to the digestion residue prior to the neutralisation step, and wherein the adsorbent contains at least 10 wt.% Ti and at least 3.5 wt.% Fe, preferably at least 30 wt.% Ti and at least 5 wt.% Fe based on the total weight of the adsorbent.

2. Process according to claim 1, **characterized in that** iron salts in dissolved form, preferably in the form of iron(II) sulphate and/or iron(III) sulphate, are added as iron ions-containing compounds.

3. Adsorbent obtained by the process according to claim 1 or 2, containing at least 10 wt.% Ti and at least 3.5 wt.% Fe, preferably at least 30 wt.% Ti and at least 5 wt.% Fe based on the total weight of the adsorbent.

4. A device containing the adsorbent according to claim 3, **characterized in that** the adsorbent is fixed on a support or enclosed in a container in the form of a cartridge or cartouche.

5. A process for removing inorganic and/or organic compounds, in particular pollutants and/or toxins, from a fluid, which process comprises bringing the fluid into contact with an adsorbent according to claim 3.

**Revendications**

1. Procédé, destiné à préparer un agent adsorbant, qui contient des composés de titane et des composés de fer, le procédé comprenant les étapes consistant à :

   (i) dissoudre une matière de départ contenant du titane ou du fer, de préférence de l'ilménite et/ou du laitier de titane avec de l'acide sulfurique, pour obtenir une solution de dissolution contenant des matières solides ;
   (ii) séparer les matières solides contenues dans la solution de dissolution, pour obtenir un résidu de dissolution et une solution de dissolution sensiblement exempte de matières solides ;
   (iii) ajouter au résidu de dissolution des composés contenant des ions de fer ;
   (iv) neutraliser complètement ou partiellement le résidu de dissolution ;
   (v) laver le résidu de dissolution neutralisé pour éliminer les sels de sulfate ; et
   (vi) faire sécher et/ou granuler le résidu de dissolution, un agent adsorbant étant obtenu,

   les composés contenant des ions de fer étant ajoutés au résidu de dissolution avant l'étape de neutralisation, et l'agent adsorbant contenant au moins 10 % en poids de Ti et au moins 3,5 % en poids de Fe, de préférence au moins 30 % en poids de Ti et au moins 5 % en poids de Fe, rapportés au poids total de l'agent adsorbant.

2. Procédé selon la revendication 1, **caractérisé en ce qu'**en tant que composés contenant des ions de fer, l'on ajoute des sels de fer sous forme dissoute, de préférence sous forme de sulfate (II) de fer et/ou de sulfate (III) de fer.

3. Agent adsorbant, obtenu d'après le procédé selon la revendication 1 ou 2, contenant au moins 10 % en poids de Ti et au moins 3,5 % en poids de Fe, de préférence au moins 30 % en poids de Ti et au moins 5 % en poids de Fe, rapportés au poids total de l'agent adsorbant.

4. Dispositif, contenant l'agent adsorbant selon la revendication 3, **caractérisé en ce que** l'agent adsorbant est fixé sur un support ou inclus dans un contenant sous la forme d'une balle ou d'une cartouche.

5. Procédé, destiné à retirer des composés inorganiques et/ou organiques, notamment des substances nocives ou toxiques d'un fluide, le procédé comprenant la mise en contact du fluide avec un agent adsorbant selon la revendication 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1582505 B1
- US 20060144793 A
- WO 2006087432 A
- US 06923917 B
- US 2003068683 A

**In der Beschreibung aufgeführte Nicht-Patentliteratur**

- Industrial Inorganic Pigments. Wiley-VCH, 2005, 59-61
- Ullmann's Enzyklopädie der Technischen Chemie. 1979, vol. 15